# FASCICULE DE BREVET EUROPEEN

(11) **EP 2 115 809 B1**
(45) Date de publication et mention de la délivrance du brevet: **08.06.2011**
(21) Numéro de dépôt: 08708593.2
(22) Date de dépôt: 01.02.2008
(51) Int. Cl.: H01M 10/42, H01M 10/48

(54) **MODULE DE BATTERIE, PACK DE MODULES**
BATTERIEMODUL UND PAKET AUS MODULEN
BATTERY MODULE, PACK OF MODULES

(30) Priorité: 06.02.2007 FR 0700827
(43) Date de publication de la demande: 11.11.2009
(73) Titulaire: Batscap, 29500 Ergué-Gabéric (FR)
(72) Inventeur: COLIN, Jacques, F-29000 Quimper (FR); SELLIN, Christian, F-29900 Concarneau (FR); JESTIN, Jean-Jacques, F-29170 Fouesnant (FR)
(74) Mandataire: Roussel, Eric Marcel Henri
(86) Numéro de dépôt international: PCT/EP2008/051287
(87) Numéro de publication internationale: WO 2008/101788

(56) Documents cités:
- WO-A-01/93398
- US-A- 6 025 695
- US-A1- 2006 193 095

## Description

L'invention concerne un module de batterie, à cellules de stockage d'énergie électrique, rechargeables et déchargeables.

Un domaine d'application de l'invention est les batteries de puissance, telles que par exemple celles servant de source d'énergie pour entraîner une chaîne de traction dans les véhicules électriques.

Bien entendu, le module de batterie peut avoir d'autres applications, par exemple pour alimenter des appareils fixes.

Ces applications à des batteries de puissance utilisent par exemple des cellules de technologie lithium - métal - polymère.

Dans un module, les cellules sont branchées entre deux bornes extérieures de connexion. Une batterie est par exemple formée de plusieurs modules ayant leurs bornes de connexion reliées en série.

On connaît par le document EP-B-998 778 une batterie contenant un calculateur principal contrôlant les modules par l'intermédiaire d'une infrastructure de communication durant les opérations de charge et de décharge. Chaque module peut fonctionner dans un mode en réseau ou dans un mode isolé. Un module passe du mode en réseau au mode isolé en réponse à une absence de connectivité en réseau avec le calculateur principal.

Le document document WO0193398 concerne un système automatique de configuration pour système d'alimentation de télécommunications, qui comprend un bus d'alimentation et un bus de communications. Un organe de commande connecté au bus de communication utilise un protocole de communications série. Un module transmet à l'organe de commande un signal d'identification qui contient un numéro d'identification du module. Les modules comprennent des modules redresseurs, des modules de connexion aux accumulateurs et des modules de distribution. Chaque module transmet le signal d'identification après connexion initiale du module au bus d'alimentation et au bus de communications. L'organe de commande reçoit le signal d'identification provenant du module ; il stocke ce numéro d'identification et produit un identificateur de module ID qui est transmis au module en vue d'être utilisé par celui-ci dans des communications de série ultérieures avec l'organe de commande. Un système automatisé de configuration d'accumulateurs pour système d'alimentation de télécommunications comprend au moins un module redresseur, un organe de commande et au moins un accumulateur de secours. Un système de base de données associé à l'organe de commande stocke une pluralité d'enregistrements, y compris une pluralité de paramètres d'accumulateur de secours. Une interface utilisateur associée à l'organe de commande reçoit des données d'entrée d'utilisateur concernant au moins un paramètre de spécification d'accumulateur. L'interface utilisateur communique avec le système de base de données pour récupérer un enregistrement sélectionné sur la base du paramètre de spécification d'accumulateur. L'organe de commande communique avec le système de base de données et utilise au moins un des paramètres de l'enregistrement sélectionné pour modifier une consigne de fonctionnement du système d'alimentation de télécommunications. Les paramètres de spécification d'accumulateur comprennent une indication du fabricant et du modèle d'accumulateur de secours.

Le document US60255695 concerne un module de batterie possédant un détecteur générant un signal représentatif d' un paramètre de la batterie. Un convertisseur A/D possède soit un état actif pour effectuer la conversion du signal soit un état inactif dans lequel aucune conversion n' est effectuée. Un processeur est connecté au convertisseur et permet le traitement du signal digital. Le processeur permet de contrôler le passage du convertisseur de l'état inactif à l'état actif lorsque certaines conditions prédéfinies sont remplies

Le document US2006193095 a trait à un système de contrôle de batterie comportant un module de détection , un module d'alimentation , un module de commande, et une ligne commune adaptée à être connectée à une batterie en fonctionnement. Dans certains modes de réalisation, un appareil de contrôle de batterie destiné au contrôle d'une sous-chaîne de cellules dans une chaîne de cellules comporte un bus de courant continu, un circuit de multiplexage/démultiplexage opérable pour relier de manière sélective des noeuds de la sous-chaîne de cellules au bus de courant continu, un circuit de conversion continu-continu présentant un premier port configuré pour être relié à travers une pluralité de cellules de la chaîne et un deuxième port relié au bus de courant continu, le convertisseur continu-continu étant opérable pour le transfert d'énergie entre les premier et deuxième ports, un circuit de détection couplé au bus de courant continu, et un circuit de contrôle configuré à être relié à un bus de communications et associé en fonctionnement au circuit de multiplexage/démultiplexage, au convertisseur continu-continu et au circuit de détection.

L'un des problèmes rencontrés sur chaque module de batterie est de pouvoir s'adapter aux environnements différents rencontrés au cours de sa vie.

En particulier, si chaque module comporte une infrastructure de communication, il faut pouvoir utiliser cette infrastructure dans des environnements différents, afin d'éviter de devoir prévoir une infrastructure de communication par environnement.

Plus généralement, un inconvénient est que la mise en oeuvre de la batterie par des utilisateurs différents dans la vie du produit s'appuie sur des architectures matérielles et logicielles différentes et conduit à des changements de contexte successifs, lourds et nuisibles à la fiabilité du système.

Qu'il s'agisse d'une architecture mono - module (recherche et développement, toutes applications basse tension), multi - modules en réseau (réalisation d'opérations de production ou de maintenance, monde de l'automatisme industriel) ou modules en série (applications haute tension à puissance élevée, applications automobiles), les mises en oeuvre retenues pour le module dans les différents environnements peuvent déboucher sur des systèmes différents, incompatibles et issus de technologies différentes.

De plus et malgré la spécialisation envisagée, subsisteront certains éléments communs aux systèmes, comme par exemple les contraintes minimales de fonctionnement et de sécurité, les caractéristiques minimales à obtenir du produit fini, le module de batterie dans sa forme unique, constituée d'un nombre fixe de cellules.

Spécialiser le module de batterie en y prévoyant des équipements embarqués différents d'un module à l'autre est rapidement une impasse. Cette spécialisation suppose en effet une immobilisation pénalisante du module de batterie ou de la batterie, une gestion de l'approvisionnement des divers équipements, la mise en place d'une gestion de l'état technique du parc de batteries, la mise en oeuvre d'outillages de production propres à chaque filière, qui ont des coûts prohibitifs.

L'invention vise à obtenir un module de batterie palliant les inconvénients précités et facilitant l'utilisation de la même infrastructure de communication dans des environnements différents.

A cet effet, un premier objet de l'invention est un module de batterie, comportant :
- une pluralité de cellules de stockage d'énergie électrique, rechargeables et déchargeables,
- deux bornes extérieures d'utilisation des cellules,
- une infrastructure de communication de messages comportant au moins un accès de communication avec l'extérieur du module,
- une unité de commande de module, comportant une unité de traitement de messages, reliée à l'infrastructure de communication, pour envoyer et recevoir des messages sur l'infrastructure de communication, caractérisé en ce qu'au moins deux des messageries choisies parmi :
- une première messagerie de caractérisation des cellules,
- une deuxième messagerie de formage des cellules, et
- une troisième messagerie d'exploitation d'un pack de batterie comportant plusieurs modules connectés par leurs bornes d'utilisation, lorsque le pack est associé à une machine consommatrice en vue de l'alimenter en énergie électrique,
sont prévues dans l'unité de traitement de messages, laquelle est configurable en l'une quelconque des messageries prévues sur celle-ci pour utiliser l'infrastructure de communication.

Ainsi, avec la troisième messagerie, l'infrastructure de communication peut être utilisée par une machine ou un équipement consommateur devant être alimenté en électricité par les cellules.

Avec la première messagerie, l'infrastructure de communication permet de dialoguer avec toutes les fonctions de mesure des cellules, prévues sur le module, par exemple à des fins de diagnostic de l'état du module, avant que le module de batterie ou la batterie soit installé sur l'équipement consommateur.

Avant l'utilisation d'un module, celui-ci passe par une opération de formage de ses cellules à partir d'un dispositif de formage. Grâce à la deuxième messagerie, l'automate industriel de ce dispositif de formage permet d'utiliser l'infrastructure de communication pour recueillir depuis le module les données utiles à ce formage.

Suivant d'autres caractéristiques de l'invention :
- l'unité de commande comporte :
   un moyen de réception d'une information de configuration de messagerie,
   une mémoire permanente pour enregistrer l'information de configuration de messagerie,
- un moyen automatique de configuration de son unité de traitement de messages suivant la messagerie correspondant à l'information de configuration de messagerie présente dans la mémoire permanente.
- le moyen automatique de configuration comporte un moyen pour scruter la valeur de l'information de configuration de messagerie présente dans la mémoire permanente et un moyen de sélection automatique de la messagerie correspondant à la valeur indiquée par cette information de configuration de messagerie.
- l'infrastructure de communication est du type bus, pour permettre de connecter l'accès extérieur à un bus de communication.
- la première messagerie comprend des moyens permettant l'utilisation du module dans un premier environnement matériel comportant les éléments suivants, reliés par leur accès de communication de messages au bus de communication: un dispositif de téléchargement des messageries vers le module, comportant un moyen d'envoi au module d'une information de configuration de l'unité de traitement de messages du module selon la première messagerie, un chargeur relié au module par une liaison de transport de courant électrique de charge en vue de charger ses cellules en énergie électrique, une interface homme - machine pour permettre à un utilisateur d'envoyer des messages de commande de fonctionnement au chargeur et/ou au module et de recevoir du chargeur et/ou du module des états de ceux-ci.
- il comporte des moyens de mesure de tension et de courant des cellules et de température du module, l'unité de commande étant apte à envoyer sur l'infrastructure de communication les mesures par au moins un message d'envoi de mesures prévu dans chaque messagerie.
- l'unité de traitement de messages comporte un moyen de réception d'un message du dispositif de téléchargement, transportant au moins un paramètre d'étalonnage des moyens de mesure dans la deuxième messagerie, et un moyen de stockage dudit paramètre d'étalonnage dans une mémoire.
- la première messagerie est asynchrone.
- l'infrastructure de communication est du type bus, pour permettre de connecter l'accès extérieur à un bus de communication, la deuxième messagerie comprend des moyens permettant l'utilisation du module dans un deuxième environnement matériel de formage des cellules, comportant les éléments suivants, reliés par leur accès de communication de messages au bus de communication: une pluralité de modules dont les bornes d'utilisation ne sont pas reliées entre elles, au moins un chargeur relié aux modules par au moins une liaison de transport de courant électrique de charge en vue de charger leurs cellules en énergie électrique et apte à être mis en état de charge ou d'arrêt de charge, un dispositif de formage des cellules des modules, comportant un banc de décharge relié aux bornes d'utilisation des modules apte à être mis en état de décharge des cellules des modules ou d'arrêt de décharge des cellules des modules, le dispositif de formage comportant un moyen d'envoi d'un message de commande de charge au chargeur et d'arrêt de décharge au banc de décharge et d'un message de commande d'arrêt de charge au chargeur et de décharge au banc de décharge.
- l'unité de traitement de messages comporte un moyen de production d'au moins un message parmi les messages suivants dans la deuxième messagerie :
   un message du module au chargeur associé, transportant la consigne de charge des cellules du module,
   un message du module au dispositif de formage, transportant les états et les alarmes du module,
      - l'unité de traitement de messages comporte un moyen de réception d'un message d'état du chargeur au module, transportant l'état du chargeur et l'éventuelle alarme du chargeur, pour faire passer le module dans une position de repli de sécurité en cas d'absence dudit message d'état du chargeur ou dans le cas où ledit message d'état du chargeur indique une alarme ou un état de tension ou de température en dehors de tolérances prescrites.
      - la deuxième messagerie est au format CANOpen.
      - l'infrastructure de communication est du type bus, pour permettre de connecter l'accès extérieur à un bus de communication, la troisième messagerie comprend des moyens permettant l'utilisation du module dans un troisième environnement matériel d'exploitation des cellules, comportant les éléments suivants, reliés par leur accès de communication de messages au bus de communication: une pluralité de modules dont les bornes d'utilisation sont reliées entre elles, au moins un chargeur relié aux modules par au moins une liaison de transport de courant électrique de charge en vue de charger leurs cellules en énergie électrique, un superviseur de la machine consommatrice.
      - l'unité de traitement de messages comporte un moyen de production dans la troisième messagerie de consignes de charge de ses cellules, destinées à un chargeur.
      - dans la troisième messagerie, le module est apte à être configuré en module maître ou en esclave, l'unité de traitement de messages du module configuré en module maître comportant un moyen d'envoi de messages de commande aux autres modules esclaves, l'unité de traitement de messages du module configuré en module esclave comportant un moyen d'exécution des messages de commande du module maître.
      - le module étant maître, l'unité de traitement de messages comporte un moyen de production d'au moins un message parmi les messages suivants dans la troisième messagerie :
   un premier message d'envoi du module au superviseur d'au moins l'une des données parmi l'état du pack de batterie, la tension totale du pack de batterie, la jauge du pack de batterie, une valeur maximum autorisée de courant de décharge et d'une valeur maximum autorisée de courant de régénération des cellules,
   un deuxième message d'envoi d'au moins une alarme du module au superviseur,
   un troisième message d'envoi du module au superviseur de la valeur du courant fourni ou absorbé par le pack et/ou de la valeur de la température maximum du pack.
      - le module étant maître, l'unité de traitement de messages comporte un moyen de réception dans la troisième messagerie d'un quatrième message d'envoi du superviseur au module d'au moins l'un parmi :
   un acquittement d'alarme,
   une demande de consommation provoquant le passage des modules du pack en mode actif, et lorsque les modules du pack sont passés en mode actif, l'envoi par le module d'un message de passage en mode actif au superviseur et d'autorisation de fonctionnement de la machine consommatrice,
   une demande de mise en veille des modules du pack de batterie,
   une demande d'arrêt des modules du pack de batterie.
      - le module étant maître, l'unité de traitement de messages comporte un moyen d'émission d'une trame de synchronisation de messages des modules dans la troisième messagerie.
      - l'infrastructure de communication est du type bus CAN.
      - les messages des première, deuxième et troisième messageries ont comme ordre de priorité de transmission sur le bus :
   priorité très haute pour le message de transmission de l'information de configuration de messagerie,
   priorité très haute pour la transmission depuis le module maître d'une trame de synchronisation,
   priorité haute pour la transmission depuis les modules des alarmes, des données, de la consigne au chargeur,
   priorité haute pour la transmission depuis le chargeur d'un message de défaut ou d'un message d'état,
   priorité haute pour la transmission depuis le module maître de commandes vers les modules esclaves,
   priorité basse pour la transmission depuis le module maître au superviseur des premier, deuxième et troisième messages,
   priorité basse pour la transmission depuis le superviseur au module maître du quatrième message.

L'invention concerne également un pack de plusieurs modules de batterie tels que décrits ci-dessus, caractérisé en ce que les infrastructures de communication des modules sont reliées à un bus de communication pour la transmission des messages.

Suivant d'autres caractéristiques de l'invention :
- les bornes d'utilisation des modules sont reliées électriquement entre elles pour l'exploitation du pack de batterie, un seul des modules est configuré en module maître, tandis que les autres modules sont configurés en modules esclaves de ce module maître pour les messages de la troisième messagerie, de telle sorte que les modules esclaves transmettent ou reçoivent leurs messages de la troisième messagerie via le module maître.
- chaque module comporte un moyen de production de données concernant le fonctionnement des cellules du module, le module maître comporte un moyen d'émission sur le bus d'une trame de synchronisation pour que les modules émettent sur le bus leurs messages de transport des données à des instants prescrits différents les uns des autres.

L'invention sera mieux comprise à la lecture de la description qui va suivre, donnée uniquement à titre d'exemple non limitatif en référence aux dessins annexés, sur lesquels :
- les figures 1, 2 et 3 représentent respectivement des premier, deuxième et troisième environnements d'un module de batterie suivant l'invention,
- la figure 4 représente schématiquement un module de batterie suivant l'invention,
- la figure 5 représente schématiquement un exemple d'interface graphique de configuration de messagerie dans l'un des environnements des figures 1, 2 et 3,
- la figure 6 représente schématiquement un autre exemple d'interface graphique de configuration de messagerie dans l'un des environnements des figures 1, 2 et 3,
- la figure 7 représente schématiquement des échanges de messages entre les différents éléments d'une première messagerie,
- la figure 8 représente sous la forme d'un tableau, l'occupation d'une trame temporelle de synchronisation par différents modules en abscisse, le temps étant représenté en ordonnées,
- la figure 9 représente schématiquement le circuit électrique utilisé dans le deuxième environnement, et
- la figure 10 représente schématiquement un mode de réalisation d'un chargeur destiné à coopérer avec un module de batterie suivant l'invention.

On décrit d'abord ci-dessous d'une manière générale un module de batterie.

### MODULE DE BATTERIE

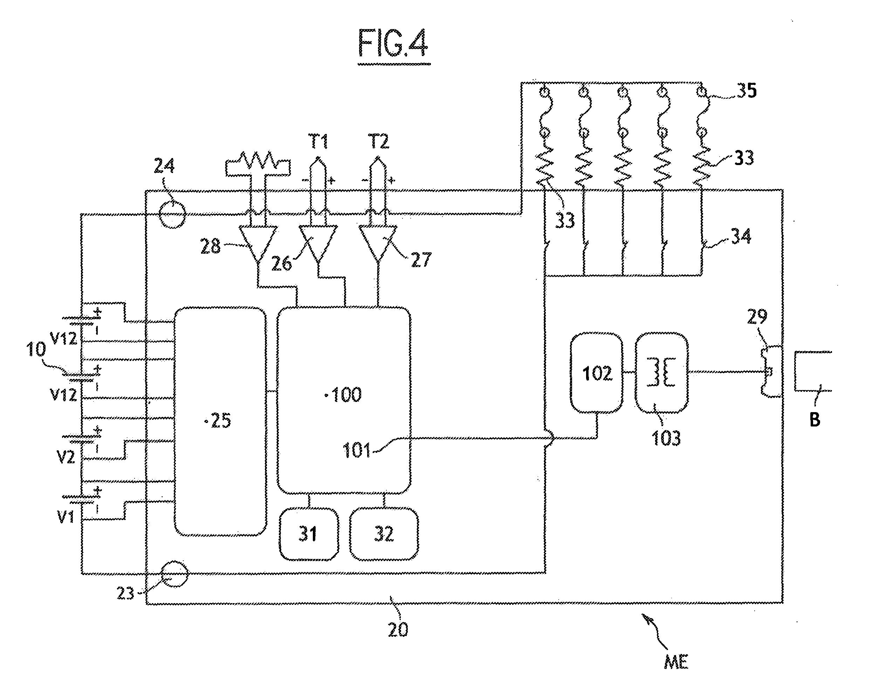

A la figure 4, un module ME de batterie suivant l'invention comporte, entre deux premières bornes 23, 24 extérieures d'utilisation, un nombre m de cellules 10 identiques en série, rechargeables et déchargeables, ainsi qu'une unité 20 de contrôle de ses propres cellules 10. Cette unité 20 de contrôle est par exemple sous la forme d'une carte électronique à circuit imprimé.

Dans un mode de réalisation, les cellules sont réalisées par assemblage de films, par exemple en lithium - métal - polymère. L'épaisseur totale de ces films est par exemple inférieure à 300 micromètres et par exemple de 150 micromètres environ. Les cellules ont une température nominale de fonctionnement supérieure à 20 °C, par exemple de 90 °C pour une technologie lithium - métal - polymère.

Une batterie ou un pack de batterie peut être constituée de un ou plusieurs modules ME reliés par leurs bornes 23, 24 d'utilisation, certains ou tous les modules ME pouvant être en série ou parallèle l'un par rapport à l'autre par leurs bornes 23, 24.

Lorsque plusieurs modules ME sont prévus, le circuit de charge de ces modules ME peut avoir par exemple un chargeur unique pour l'ensemble des modules, ou un chargeur par module. Par conséquent, dans ce qui suit, lorsque plusieurs chargeurs CHG individuels sont prévus, associés chacun à un module ME différent, ces chargeurs CHG individuels pourront être remplacés par un chargeur CHG unique pour l'ensemble des modules.

Dans le mode de réalisation représenté à la figure 4, le module ME comporte un ou plusieurs organes ou plaques 33 de chauffage électrique de ses cellules 10 associées à leur température nominale de fonctionnement, en ayant par exemple des premiers et deuxièmes organes 33 de chauffage dans deux première et deuxième zones différentes : une première zone de parois et une deuxième zone centrale. Chaque organe 33 de chauffage est en série avec un interrupteur 34 de chauffe, dont l'ouverture et la fermeture sont commandées en phase de régulation thermique par une unité 100 décrite ci-dessous, pour provoquer le chauffage ou l'absence de chauffage des cellules par l'organe 33. En outre, un fusible thermique 35 de protection est prévu en série avec l'organe 33. En outre, le module ME comporte dans son unité 20 une unité 25 de mesure de la tension aux bornes de chacune de ses cellules 10 associées, au moins une unité 26 de mesure de température du module et une unité 28 de mesure de courant des cellules 10. Il est par exemple prévu des unités 26, 27 de mesure de la température du module dans les différentes zones de chauffage, comme par exemple une unité 26 de mesure de température dans la zone de parois extérieures du module et une unité 27 de mesure de température dans la zone centrale du module. Les mesures de tension, de température et de courant des unités 25, 26, 27, 28 sont envoyées à l'unité 100 de calcul et de commande de l'unité 20, comportant par exemple un microcontrôleur. L'unité 100 est munie d'une mémoire vive 31 et d'une mémoire 32 de sauvegarde permanente, par exemple de type EEPROM.

En outre, le module comporte une infrastructure de communication, permettant à l'unité 100 de commande du module de communiquer avec l'extérieur. Cette infrastructure de communication est d'un type prédéterminé, identique pour les modules d'une même batterie. L'infrastructure de communication de chaque module comporte un accès 29 avec l'extérieur, qui est destiné à être connecté à un bus B de communication extérieur du type prédéterminé, pour échanger des informations sur ce bus B avec d'autres entités, pouvant être des modules de batterie ou d'autres dispositifs. A la figure 4, cette infrastructure de communication du module comporte des organes 102, 103 de conversion de signaux, reliant un accès 101 d'émission / réception de signaux de l'unité 100 à l'accès 29 de communication extérieur du type prédéterminé, afin de transformer les signaux reçus sur l'accès 29 extérieur en signaux compatibles avec l'unité 100 pour réception sur l'accès 101 et transformer les signaux émis par l'unité 100 depuis l'accès 101 en signaux du type prédéterminé sur l'accès 29 pour émission vers l'extérieur. Le type prédéterminé de l'infrastructure de communication est par exemple prévu pour connecter l'accès 29 extérieur à un bus CAN, c'est-à-dire un réseau de multiplexage, l'organe 102 étant dans ce cas une interface CAN.

En outre, le module ME peut également comporter une liaison série reliée à l'unité 100 de commande par un autre accès de celle-ci, non représenté. Cette liaison série est par exemple de type RS232.

Sur l'unité 100, par exemple sur sa mémoire permanente 32, sont enregistrées des première, deuxième et troisièmes messageries différentes, devant être utilisées respectivement dans des premier, deuxième et troisième environnements du module ME, ayant des architectures différentes de connexion au bus B, qui sont décrites ci-dessous.

Ci-dessous, on décrit d'abord chacun des trois environnements, puis chacune des trois messageries associées.

### PREMIER ENVIRONNEMENT DE CARACTERISATION DES CELLULES

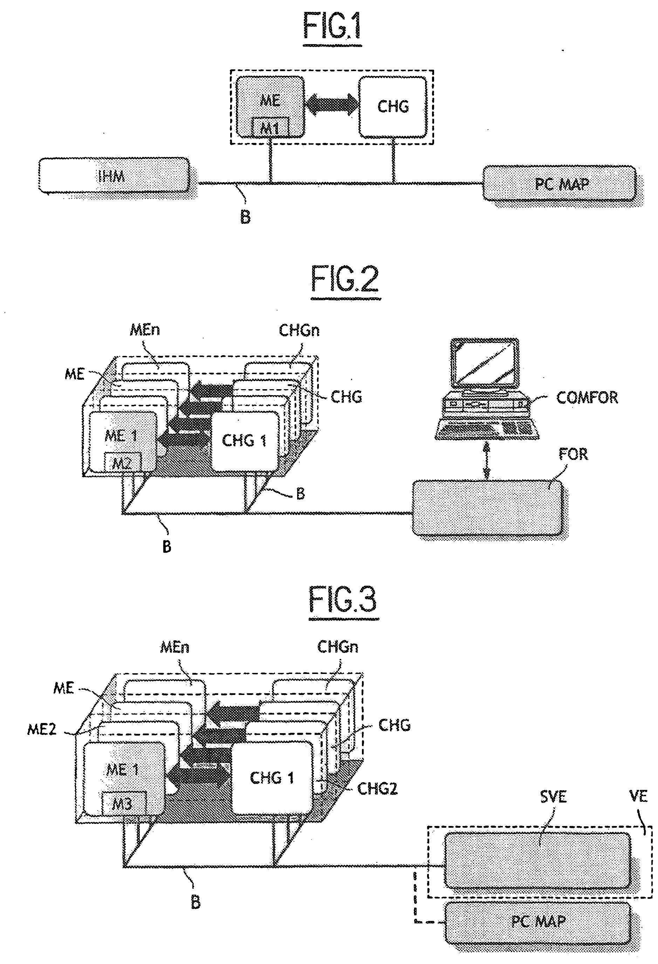

A la figure 1, le module ME de batterie est représenté dans le premier environnement servant à la caractérisation de ses cellules C. Ce premier environnement possède une architecture, dans laquelle les éléments suivants sont reliés chacun par leur accès au bus B de communication :
➢ le module ME de batterie, dont l'unité 20 doit réaliser les fonctions suivantes, se retrouvant dans les autres architectures de fonctionnement mais avec une orientation réseau :
   ■ les fonctions locales liées au microcontrôleur et à l'alimentation de la carte,
   ■ l'acquisition et la mesure des grandeurs physiques de la batterie : tension de chaque cellule, tension globale du module, courant circulant dans le module, température interne du module des deux zones définies de chauffage : zone périphérique du module ou de paroi de valeur T1 et zone centrale de valeur T2,
   ■ la gestion thermique de la batterie : régulation thermique via la commande des organes de chauffe,
   ■ la gestion de la charge du module de batterie et le pilotage du chargeur,
   ■ la sécurité de fonctionnement et les alarmes du système,
   ■ la communication au travers du bus B.
➢ un chargeur CHG comportant des bornes de sortie pour être connecté électriquement aux bornes 23, 24 des cellules du module ME afin de les charger en énergie électrique par un câble de charge, ainsi que cela est représenté par la double flèche épaisse. Pour charger les cellules, le chargeur CHG doit d'abord assurer le chauffage de celles-ci par les organes 33 pendant une phase initiale de montée en température jusqu'à leur température nominale de fonctionnement, puis effectuer la charge des cellules en phase de régulation thermique à cette température nominale de fonctionnement, dans laquelle les interrupteurs 34 de chauffe sont commandés en ouverture ou fermeture. Bien qu'autonome pour l'aspect sécurité de fonctionnement, le chargeur fonctionne en tant que périphérique du module ME et répercute la consigne reçue du module ME sous la forme d'une tension sur ses bornes de sortie.
➢ une interface homme - machine IHM pour permettre à un utilisateur d'envoyer des commandes, telles que par exemple des commandes de marche et d'arrêt, des commandes d'affichages d'états du module de batterie sur un écran,
➢ un dispositif, désigné par PCMAP, permettant le téléchargement sur le bus B du ou des programmes devant être enregistrés dans l'unité 100 du module ME pour son fonctionnement.

Ce dispositif PCMAP permet ainsi de télécharger sur l'unité 100 du module ME les première, deuxième et troisièmes messageries.

La première messagerie M1 est prévue sur le module ME pour échanger des messages sur le bus B de communication avec les éléments de ce premier environnement, et est appelée messagerie de caractérisation des cellules. Dans ce premier environnement, les messages de la première messagerie sont envoyés selon un fonctionnement asynchrone.

### DEUXIEME ENVIRONNEMENT DE FORMAGE DES CELLULES

A la figure 2, le module ME de batterie est représenté dans le deuxième environnement servant à l'étape du processus de fabrication des cellules 10, dénommée formage des cellules. Ce formage consiste en un conditionnement électrochimique de chaque cellule 10 qui lui confèrera les caractéristiques minimales requises pour assurer le stockage d'énergie. Le formage des cellules est défini dans un format du nombre fixe m de cellules (par exemple 12 cellules). Ce deuxième environnement de formage reprend les fonctions du module ME dans le premier environnement. Ce deuxième environnement de formage possède une architecture, dans laquelle les éléments suivants sont reliés chacun par leur accès au bus B de communication :
➢ plusieurs modules ME, à savoir n modules ME1 à MEn électriquement indépendants sur leurs bornes électriques 23, 24,
➢ les n chargeurs CHG1 à CHGn associés respectivement aux modules ME1 à MEn et conformes chacun au chargeur CHG décrit ci-dessus, chaque chargeur ayant une liaison de charge, représentée par la double flèche, avec son module associé,
➢ un dispositif FOR de formage, relié aux bornes 23, 24 des cellules 10 du module ME pour le formage de celles-ci. Ce dispositif FOR de formage comporte par exemple un automate industriel programmable ayant un logiciel de pilotage du processus de formage. Cet automate de formage est relié au bus B et à une unité COMFOR de commande de configuration.

Le formage correspond à un cyclage particulier des cellules et est commandé par le dispositif FOR de formage.

D'une manière générale, on appelle cyclage une succession de cycles de charge et de décharge des cellules. Dans un mode de réalisation, le chargeur CHG est alimenté en électricité par un branchement sur le secteur et possède un moyen INTCH d'interruption de cette alimentation, dont la position peut être commandée depuis un accès de commande ACCINTCH. Pour la charge, on alimente le chargeur CHG. Pour la décharge, on coupe l'alimentation du chargeur CHG.

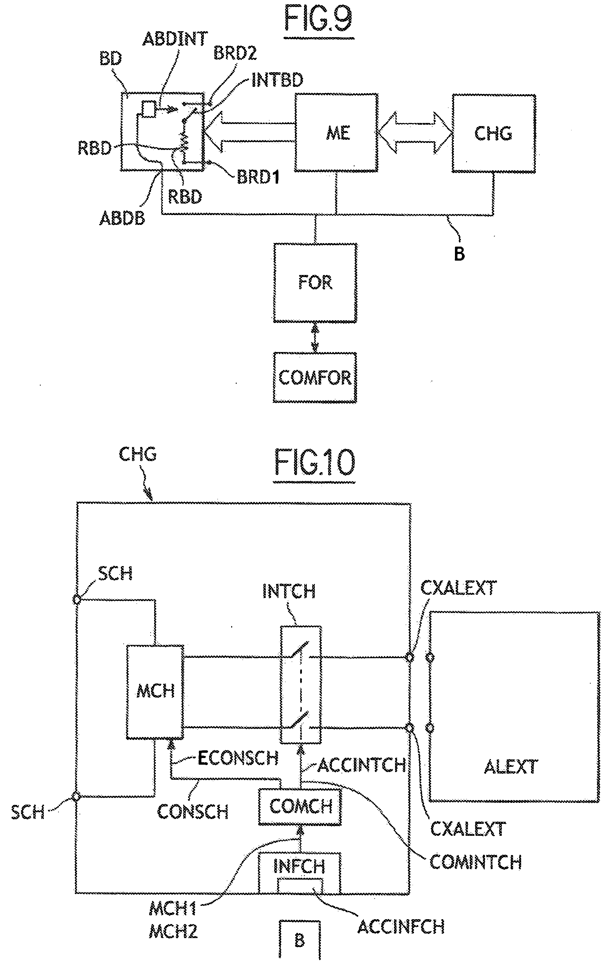

Dans le mode de réalisation représenté à la figure 10, le chargeur CHG pour la charge du module de batterie comporte :
- des bornes SCH de sortie destinées à être connectées électriquement aux cellules du module,
- un moyen MCH de charge en énergie électrique des cellules à partir d'une alimentation électrique extérieure prescrite ALEXT suivant une consigne quantitative de charge CONSCH, le moyen MCH de charge étant relié aux bornes SCH de sortie et pouvant avoir par exemple une entrée ECONSCH de réception de la consigne quantitative de charge CONSCH,
- une connexion électrique CXALEXT destinée à être reliée à l'alimentation électrique extérieure prescrite ALEXT,
- un moyen INTCH d'interruption entre la connexion électrique et le moyen de charge, dont les positions de conduction et d'interruption peuvent être commandées,
- une infrastructure INFCH de communication, comportant au moins un accès ACCINFCH de communication avec l'extérieur du chargeur, apte à recevoir au moins un message MCH1 comportant une commande COMINTCH de commutation d'alimentation et au moins un message MCH2 contenant la consigne quantitative de charge CONSCH,
- des moyens automatiques de commande COMCH reliés à l'infrastructure INFCH de communication pour commander la position du moyen d'interruption INTCH suivant la commande de commutation d'alimentation en conduction pour provoquer la charge ou en interruption pour couper la charge, et pour imposer au moyen de charge la consigne quantitative de charge CONSCH, par exemple en transmettant la consigne quantitative de charge CONSCH à l'entrée ECONSCH à laquelle les moyens de commande COMCH sont reliés.

Dans l'exemple de réalisation décrit ci-dessus, l'infrastructure INFCH de communication du chargeur est prévue pour être reliée au bus B.

En formage, les cellules 10 du modules ME sont reliées à un banc BD de décharge, ainsi que cela est représenté à la figure 9, ce banc de décharge étant absent dans les premier et troisième environnements. Ce banc BD de décharge comporte, entre deux bornes électriques BRD1 et BRD2 de liaison électrique aux bornes 23, 24 d'utilisation du module ME, une résistance RBD de décharge en série avec un moyen INTBD d'interruption, dont la position peut être commandée depuis un accès ABDINT. Ce banc BD de décharge comporte également un accès ABDB relié au bus B de communication.

Le dispositif FOR de formage transmet via le bus B des commandes de commutation d'alimentation du chargeur CHG, pour le faire passer en charge ou pour couper la charge. Le dispositif FOR de formage transmet via le bus B au module ME des messages indiquant si le module ME est mis en charge ou en décharge. Le dispositif FOR de formage transmet, via le bus B à l'accès ABDINT, des commandes de commutation du moyen INTBD d'interruption pour le fermer en fonctionnement de décharge des cellules du module ME sur la résistance RBD, dans lequel le chargeur CHG est coupé des cellules du module ME, et pour l'ouvrir en fonctionnement de charge des cellules du module ME par le chargeur CHG, dans lequel la résistance RBD est coupée des cellules du module ME. Les commandes des organes INTCH / ALEXT et BD peuvent passer par le bus B ou par des liaisons électriques dédiées entre l'automate FOR de formage et le moyen d'interruption INTCH d'une part et entre l'automate FOR de formage et le banc de décharge BD d'autre part.

Dans l'architecture de formage, le dispositif FOR de formage est l'entité maîtresse du réseau, tandis que les autres éléments ME, CHG sont des périphériques esclaves. Le formage des cellules fait travailler les modules en réseau, mais de manière indépendante. Cette architecture de formage utilise par exemple sur le bus B le protocole CAN Open (éditée par le GIE CAN in Automation ― Cia), qui est une spécialisation de la norme CAN avec une reprise de la couche applicative CAL, c'est-à-dire CAN application layer (éditée comme CANOpen par le Gie CAN in Automation-Cia) et est destinée à permettre sa mise en oeuvre dans des équipements industriels compatibles. Dans le mode de réalisation en CAN Open, la vitesse est par exemple de 125 Kbaud.

La deuxième messagerie M2 est prévue sur le module ME pour échanger des messages sur le bus B de communication avec les éléments de ce deuxième environnement, et est appelée messagerie de formage des cellules. La deuxième messagerie correspond à une encapsulation de la première messagerie avec en plus des messages supplémentaires qui seront indiqués ci-dessous.

### TROISIEME ENVIRONNEMENT D'EXPLOITATION DES CELLULES

A la figure 3, le module ME de batterie est représenté dans le troisième environnement, dans lequel principalement le module ME alimente depuis ses bornes 23, 24 en énergie électrique une machine consommatrice VE, telle que par exemple une chaîne de traction d'un véhicule automobile, dans laquelle le module ME est embarqué. Ce troisième environnement d'exploitation possède une architecture, dans laquelle les éléments suivants sont reliés chacun par leur accès au bus B de communication :
➢ plusieurs modules ME, à savoir n modules ME1 à MEn reliés par leurs bornes électriques 23, 24, pour constituer une batterie ou un pack de batterie, dont les deux bornes 23, 24 d'extrémité sont reliées à la machine VE par des moyens non représentés pour que les cellules des modules alimentent celle-ci en courant électrique. Les modules ME sont par exemple en série par leurs bornes 23, 24 dans le cas de l'alimentation d'une chaîne de traction d'un véhicule automobile.
➢ les n chargeurs CHG1 à CHGn associés respectivement aux modules ME1 à MEn et conformes chacun au chargeur CHG décrit ci-dessus, chaque chargeur ayant une liaison de charge, représentée par la double flèche, avec son module associé,
➢ un superviseur SVE de la machine consommatrice VE, ce superviseur SVE ayant un calculateur embarqué sur la machine VE,
➢ un dispositif, désigné par PCMAP, permettant le téléchargement sur le bus B du ou des programmes devant être enregistrés dans l'unité 100 du module ME pour son fonctionnement. Dans une version étendue dans ce troisième environnement, ce dispositif PCMAP permet en plus, par rapport à sa version du premier environnement les opérations suivantes :
   ■ le téléchargement, depuis les modules ME par le bus B, du logiciel présent sur les modules ME,
   ■ la configuration du pack de batterie : définition du réseau de modules ME1 à MEn (adresse, nombre de modules ME, vitesse de communication CAN, système de messagerie) via le bus CAN ou une liaison série, par exemple de type RS232, prévue en plus sur chaque module et reliée à son unité 100, ainsi que cela sera décrit ci-après,
   ■ l'émission de commandes vers la batterie,
   ■ la supervision du système, la lecture, l'affichage et l'enregistrement des mesures effectuées par la batterie,
   ■ le contrôle automatique des câblages entre les modules ME et les chargeurs CHG.

Cette troisième architecture est organisée autour d'une structure de dialogue maître - esclaves et maître - superviseur. Un module ME, désigné par ME1 à la figure 3, est maître, tandis que les autres éléments, sauf le superviseur SVE, en sont esclaves. Pour communiquer avec les modules ME1 à MEn, le superviseur SVE communique avec le module maître ME1, lequel communique ensuite avec les modules esclaves ME2 à MEn.

Dans un mode de réalisation, le bus B est formé par un réseau de communication primaire et par un réseau de communication secondaire. Les modules sont reliés entre eux par le réseau de communication secondaire, interne à la batterie, par exemple du type CAN, c'est-à-dire un réseau de multiplexage. Le module maître ME1 est chargé de contrôler le réseau secondaire de communication. A cet effet, chacun des modules maître et esclaves comporte une interface de communication avec le réseau secondaire.

En outre, parmi les module ME, seul le module maître ME1 comporte une autre interface avec le réseau primaire de communication avec l'extérieur, par exemple du type CAN. Le superviseur SVE et les chargeurs comportent également une interface reliée au réseau primaire.

La séparation des deux réseaux de communication, primaire et secondaire, peut être considérée d'un point de vue logique ou physique ; en d'autres termes ces deux réseaux peuvent être interconnectés entre eux ou non. Chaque module esclave contrôle l'intégrité de ses mesures avant de les transmettre, via le réseau secondaire, au module maître.

Dans les premier et troisième environnements, le bus B sert de bus de diffusion de données, par des messages de première et troisième messageries ne contenant pas d'adresse de destinataire.

Dans l'application à l'alimentation en électricité d'une chaîne de traction d'un véhicule automobile, un pack de batterie est composé d'un nombre m de 2 à 15 modules maximum, suivant la définition de messagerie retenue. Dans un exemple de réalisation, les packs sont composés de 9 ou 10 modules pour une tension maximale totale de 360 ou 400 V et une puissance maximale en début d'utilisation de 72 ou 80 kW. Les modules de l'architecture VE sont raccordés électriquement en série pour cumul des tensions unitaires.

La troisième messagerie M3 est prévue sur le module ME pour échanger des messages sur le bus B de communication avec les éléments de ce troisième environnement, et est appelée messagerie d'exploitation des cellules.

Chaque module reçoit une adresse qui conditionne son affectation électrique. Ainsi le module maître ME1 voit son pole négatif 23 relié au zéro Volt du pack, alors que le module MEn de rang le plus élevé a son pôle positif 24 relié à la tension positive du pack de batterie.

En interne, le module maître assure le pilotage des processus internes de chauffage, de charge et de décharge, la gestion des différents modes de fonctionnement à l'échelle du pack, le traitement des commandes externes, des alarmes et de l'aspect sécurité de fonctionnement du pack. Le module maître ME1 assure également la synchronisation globale des émissions de données par les modules ME1 à MEn sur le bus B pour répartir au mieux la charge du réseau et fiabiliser les échanges.

Dans le cas du circuit de charge à chargeur unique, le module maître ME1 pilote le chargeur CHG en lui envoyant des consignes via le bus B. Dans le cas du circuit de charge à chargeurs CHG individuels associés aux modules ME, chaque module ME1 à MEn pilote son chargeur CHG1 à CHGn associé en lui envoyant ses propres consignes via le bus B.

Le ou les chargeurs CHG transforment une consigne lue sur le bus B en valeur de tension de sortie sur ses bornes de charge.

En externe, le module maître ME1 communique avec le superviseur SVE. Les échanges d'information entre le module maître ME1 et le superviseur SVE comprennent :
- du module maître ME1 vers le superviseur SVE : un message décrivant l'état de la batterie et les valeurs de synthèse, un message contenant les alarmes du système et les délestages associés,
- du superviseur SVE vers le module maître ME1 : un message commun de commande et d'information sur l'état de la machine VE. Ce message sera ensuite traité par le module maître ME1.

### CONFIGURATION D'UNE MESSAGERIE

Dans chaque module ME, l'unité 100 de commande est apte à être configurée pour fonctionner avec l'une parmi la première messagerie de caractérisation des cellules, la deuxième messagerie de formage des cellules et la troisième messagerie d'exploitation des cellules. Par défaut, un module ME est configuré d'office dans l'une des messageries, par exemple la première.

Par exemple, pour configurer le module ME dans une messagerie, on lui envoie une information de configuration de messagerie depuis un élément extérieur, disposant donc d'un moyen d'envoi d'une telle information de configuration de messagerie.

Dans le premier environnement, le dispositif PCMAP envoie l'information de configuration de la première messagerie au module ME. Lorsque les modules ME se trouvent dans le deuxième environnement, l'unité COMFOR de commande de configuration leur envoie l'information de configuration de la deuxième messagerie. Lorsque les modules ME se trouvent dans le troisième environnement, le dispositif PCMAP envoie l'information de configuration de la troisième messagerie aux modules ME. Dans ce qui suit, ces dispositifs PCMAP et cette unité COMFOR de commande de configuration sont appelés éléments configurateurs dans les différents environnements.

Dans le mode de réalisation représenté aux figures, l'information de configuration de messagerie est acheminée à l'unité 100 du module ME par le bus B de communication.

Dans des modes de réalisation non représentés, l'information de configuration de messagerie est acheminée à l'unité 100 du module ME par un autre moyen de communication que le bus B, comme par exemple par la liaison série mentionnée ci-dessus, le moyen d'envoi de l'information de configuration de messagerie étant alors connecté à cet autre moyen de communication du module ME.

L'unité 100 de chaque module ME comporte un moyen de réception de l'information de configuration de messagerie. Lorsque l'information de configuration de messagerie est reçue par l'unité 100 du module ME, l'unité 100 l'enregistre dans la mémoire permanente 32.

L'unité 100 de chaque module ME comporte un moyen pour scruter la valeur de l'information de configuration de messagerie présente dans la mémoire permanente 32 et un moyen pour sélectionner automatiquement la messagerie correspondant à la valeur indiquée par cette information de configuration de messagerie. Cette scrutation et cette sélection sont par exemple effectuées chaque fois qu'un message est reçu par l'unité 100 sur le bus B.

L'unité 100 de commande de chaque module ME comporte ainsi un moyen automatique de configuration de son unité de traitement de messages suivant la messagerie correspondant à l'information de configuration de messagerie présente dans la mémoire. L'unité de traitement de messages traitera ainsi les messages reçus ou à émettre sur le bus B comme des messages appartenant à la messagerie ainsi sélectionnée par l'information de configuration de messagerie.

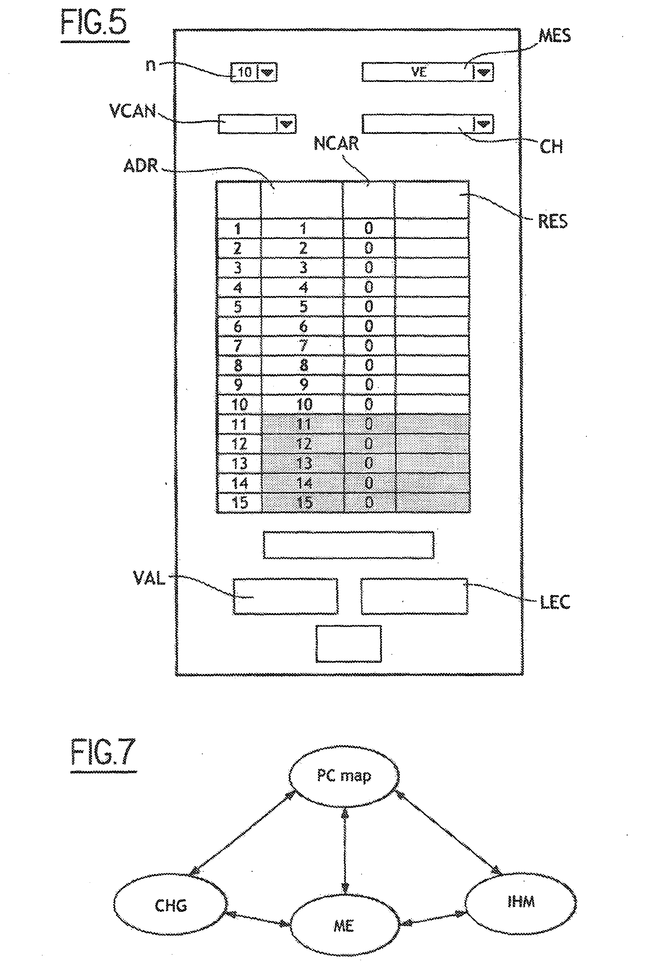

Dès que la communication par le bus B est opérationnelle sur le pack ou le module, l'utilisateur accède sur l'élément configurateur aux fonctions de configuration de chaque module, décrites ci-dessous dans l'exemple de la figure 5.

Sur l'élément configurateur PCMAP ou COMFOR, l'interface de configuration requiert de la part de l'utilisateur de connaître le numéro de série des cartes des modules ME à configurer, qui est l'élément discriminant de tous les calculateurs connectés sur le réseau puisque écrit en mémoire permanente pendant la fabrication de la carte.

L'utilisateur sélectionne tout d'abord les éléments de définition de l'architecture du réseau : nombre n de modules ME dans le pack, l'identifiant de la messagerie MES choisie, correspondant à l'information de configuration de messagerie, vitesse VCAN du bus CAN, architecture CH du circuit de charge entre les modules ME et les entités de charge de ceux-ci, pouvant être par exemple un chargeur unique pour l'ensemble des modules ou un chargeur par module. On saisit ensuite dans la colonne NCAR le numéro de série en regard de l'adresse ADR du module ME retenue dans le pack (qui est par exemple l'adresse 1 s'il s'agit de la première architecture de caractérisation). Puis on valide l'envoi de la nouvelle information de configuration par appui sur une touche VAL de validation. Une colonne RES de résultat de configuration indique alors si l'opération s'est bien passée.

L'élément configurateur comporte également une fonction de vérification de configuration, pour vérifier que le pack ou le module est dans une configuration attendue par appui sur la touche LEC de lecture de configuration. La colonne RES de résultat de configuration indique alors en réponse si tous les modules sont dans la configuration affichée dans le champ MES de définition de messagerie du menu.

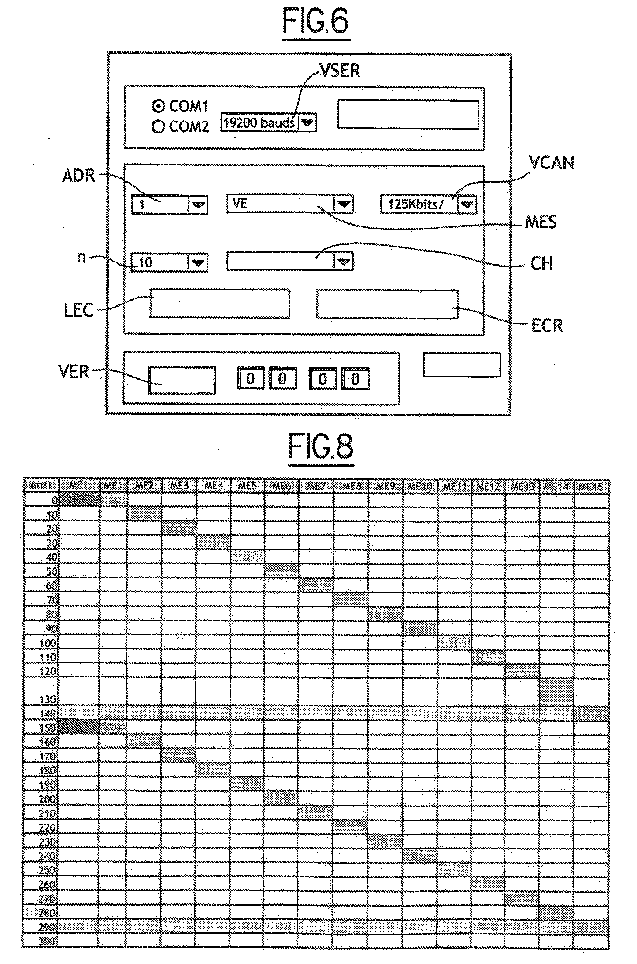

La figure 6 représente une variante de l'interface de configuration de la figure 5, utilisant un autre moyen de communication que le bus B, comme par exemple par la liaison série mentionnée ci-dessus. Une fonction VSER permet de configurer les paramètres de la liaison série, tels que par exemple sa vitesse en bauds. La commande de la fonction ECR d'écriture de configuration permet d'écrire la configuration retenue après sélection de l'adresse ADR du module ME, de l'identifiant de messagerie MES, de la vitesse VCAN, du nombre n de modules ME, de l'architecture du circuit CH de charge. Cette fonction est valide quelle que soit la configuration initiale. La fonction LEC de lecture de configuration permet de lire les valeurs correspondantes pour ADR, MES, VCAN, n, CH. Une fonction annexe VER permet également de lire la version du logiciel embarqué sur les modules ME.

### PREMIERE MESSAGERIE DE CARACTERISATION DES CELLULES

La première messagerie prévoit des échanges de messages représentés par des flèches à la figure 7, à savoir :
- entre le dispositif PCMAP et le chargeur CHG,
- entre le dispositif PCMAP et le module ME,
- entre le dispositif PCMAP et l'interface IHM,
- entre le module ME et le chargeur CHG,
- entre le module ME et l'interface IHM.

Les informations transportées par ces messages sur le bus B comportent par exemple l'une ou l'autre des suivantes :

| Module d'énergie en émission : | Module d'énergie en réception : |
|---|---|
| - Grandeurs physiques | - Commandes |
| - Valeurs brutes converties | - Paramètres batterie |
| - Etats | - Vitesse de communication |
| - Alarmes | - Paramètres réels après |
| - Consigne | étalonnage |
| - Date | - Etats chargeur |

| Chargeur en émission : | Chargeur en réception : |
|---|---|
| - Etats | - Consigne |
| - Alarmes | - Commandes de test |

| interface IHM en émission : | Interface IHM en réception : |
|---|---|
| - Commandes | - Grandeurs physiques |
| - Commandes de test | - Alarmes |
| | - Commandes de test |

| Dispositif PCMAP en émission : | Dispositif PCMAP en réception : |
|---|---|
| - Commandes | - Grandeurs physiques |
| - Commandes de test | - Valeurs brutes converties |
| - Paramètres batterie | - Etats du module |
| - Vitesse de communication | - Etats du chargeur |
| - Paramètres réels après | - Alarmes du module |
| étalonnage | - Alarmes du chargeur |
| | - Date |

Les grandeurs physiques comprennent des mesures instantanées effectuées sur le module par les unités de mesure, qui sont envoyées par le module au dispositif PCMAP : tension de chaque cellule, température de module, courant de cellule (positif en charge, négatif en décharge), tension des cellules du module, et d'autres informations, qui sont envoyées par le module au dispositif PCMAP et à l'interface IHM : capacité restante du module en pourcentage, puissance.

Les valeurs brutes converties sont calculées et mémorisées sur le module. Pour les récupérer, le dispositif PCMAP envoie un message de demande au module, lequel répond par la valeur ou la date d'acquisition de cette valeur. Ces valeurs comportent par exemple l'une ou plusieurs des suivantes : résistances internes Rᵥ des cellules, tension V correspondant à la mesure de résistance Rᵥ des cellules.

Les informations d'état émises par le module vers le dispositif PCMAP ou l'interface IHM comprennent par exemple le fait que le module est à l'arrêt, en veille, en mode actif, en charge, en décharge ou autres. Les informations d'état émises par le chargeur CHG vers le dispositif PCMAP ou l'interface IHM comprennent par exemple le fait que le chargeur est prêt à fonctionner, que la tension du chargeur est en dehors de tolérances prédéterminées, que la tension du chargeur est limitée, que la température du chargeur est en dehors de tolérances prédéterminées.

Les commandes émises depuis le dispositif PCMAP ou l'interface IHM comprennent par exemple une commande d'arrêt du module, une commande d'activation du module. Les commandes émises depuis le dispositif PCMAP comprennent par exemple une commande d'inhibition des alarmes du module, une commande d'étalonnage du module.

La consigne est une consigne de tension du chargeur, émise depuis le module ME ou le dispositif PCMAP vers le chargeur CHG.

Les commandes de test comprennent une commande de début de test émise par le dispositif PCMAP vers l'interface IHM, laquelle émet une réponse à cette commande de test vers le dispositif PCMAP.

Les paramètres de la batterie sont demandés par un message de demande envoyé par le dispositif PCMAP au module ME, lequel lui renvoie un message de réponse contenant la valeur du paramètre indique dans le message de demande. Ces paramètres de la batterie comprennent par exemple le numéro de série du module ME, la capacité de la batterie d'après les spécifications, la période de mesure des températures, la période de scrutation des tensions.

Les alarmes comprennent des messages envoyés du module ME au dispositif PCMAP et à l'interface IHM, comme par exemple : une alarme d'emballement thermique, une alarme d'anomalie de chauffage, une alarme de défaillance de la mesure de tension ou de température, une alarme de décharge profonde. Les alarmes comprennent également un message de défaut émis par le chargeur vers tous les autres éléments. L'historique des alarmes enregistrées par le module ME ou le chargeur CHG peut être récupéré par le dispositif PCMAP. Pour ce faire, le dispositif PCMAP envoie au module ME ou au chargeur CHG un message de demande de lecture d'une déterminée parmi les alarmes enregistrées. Le module ou chargeur renvoie alors au dispositif PCMAP un message de réponse contenant les valeurs de cette alarme spécifiée dans le message de demande, chaque valeur étant associée dans le message de réponse à l'information de date de cette alarme, ayant été enregistrée avec la valeur.

Les paramètres réels après étalonnage sont les coefficients de conversion des chaînes analogiques de mesure, dédiées à la mesure des tensions (cellule, module) par l'unité 25, du courant par l'unité 28 et de la température par les unités 26, 27. La chaîne de mesure est synthétisée par une loi de type affine et utilise deux coefficients : un gain multiplicateur et une constante additive. Il est prévu initialement des coefficients par défaut, qu'il faut affiner par une phase d'étalonnage réalisée pendant la phase de test fonctionnel en usine. Après étalonnage, la synthèse des grandeurs physiques mesurées s'effectue non plus avec les coefficients par défaut, mais avec les coefficients réels. Ces paramètres sont stockés en mémoire non volatile, par exemple sur la carte en 32, et sont protégés en accès. Le dispositif PCMAP est à même par requête de type paramètre de les relire. Ces paramètres restent enregistrés et utilisables pour les autres messageries.

### DEUXIEME MESSAGERIE DE FORMAGE DES CELLULES

La deuxième messagerie comporte des premiers messages, qui contiennent les données utiles au formage et qui sont envoyés par les modules ME et les chargeurs CHG via le bus B au dispositif FOR de formage maître sur requête de ce dernier selon un mode client/serveur. L'occurrence des requêtes du dispositif FOR de formage maître est prédéfinie : soit périodique, soit événementielle.

Dans le mode de réalisation en CAN Open, ces premiers messages de formage sont au format SDO (service data object : données de service). Les modules ME et les chargeurs CHG opèrent en tant que serveur SDO et le dispositif FOR de formage en tant que client SDO. Un échange par SDO permet d'accéder à l'ensemble des objets d'un dictionnaire. Ce dictionnaire sert d'interface entre communication et application et comprend les champs suivants :
- index : numéro de l'objet dans le dictionnaire. Il permet l'accès à l'objet en écriture et en lecture,
- libellé : nom usuel de l'objet ou de la donnée,
- unité : unité de la grandeur si applicable,
- codage : codage informatique de la donnée selon la normalisation CAN Open,
- sous-index : dans le cas de données complexes (regroupement de données ou agrégats), donne la possibilité le les classer avec et sans sous-index. Par exemple, pour une entité décomposable en sous-ensembles de même nature :
   Index : 2000,
   Libellé : tension cellule,
   Sous-index 1 : tension cellule 1,
   Sous-index 12 : tension cellule 12.

Un message SDO comporte par exemple 7 octets de données.

La deuxième messagerie de formage comporte des deuxièmes messages automatiques de sécurité entre éléments ME, CHG sans intervention du dispositif FOR de formage maître.

Les deuxièmes messages de sécurité sont envoyés en temps réel de manière asynchrone et cyclique avec la plus grande priorité. Les deuxièmes messages de sécurité comprennent :
- un message MSG1 envoyé par le chargeur CHG en émission au module ME associé en réception, transportant son état et son éventuelle alarme (défaut), avec une récurrence de par exemple environ une seconde,
- un message MSG2 envoyé par le module ME en émission au chargeur associé CHG en réception, transportant la consigne de charge, avec une récurrence inférieure à celle des messages MSG1 et MSG3, de par exemple environ 150 millisecondes,
- un message MSG3 envoyé par le module ME en émission au dispositif FOR de formage, transportant les états et les alarmes du module ME, avec une récurrence de par exemple environ une seconde.

Une fois que le module ME est en mode opérationnel de formage, il vérifie la réception régulière des messages MSG1. Dans le cas où le module ME détecte un problème, indiqué par l'absence de réception des messages MSG1 ou par un message MSG1 indiquant une tension ou une température du chargeur CHG se trouvant en dehors des tolérances prescrites ou indiquant une alarme, le module ME se met dans une position prescrite de repli de sécurité.

Une fois que le chargeur CHG est en mode opérationnel de formage, il vérifie la réception régulière des messages MSG2. Dans le cas où le chargeur CHG détecte un problème, indiqué par l'absence de réception des messages MSG2, le chargeur CHG se met dans une position prescrite de repli de sécurité.

Dans le mode de réalisation en CAN Open, ces deuxièmes messages de sécurité sont au format PDO (process data object : données de processus). Un message PDO comporte par exemple 8 octets de données.

### TROISIEME MESSAGERIE D'EXPLOITATION DES CELLULES

Cette troisième messagerie prévoit des messages de groupe adressés à la fois à un module ME et à son chargeur CHG associé. On définit à cet effet n adresses de groupes MEi/CHGi, avec i compris entre 1 et n. Ces messages de groupe sont possibles en écriture vers les modules et les chargeurs.

Un mécanisme de synchronisation est implémenté, piloté par le module maître ME1, qui évite que les modules et/ou les chargeurs n'émettent les mêmes données en même temps afin de ne pas surcharger le bus B ponctuellement. A cet effet, le module maître ME1 émet vers les autres éléments une trame de synchronisation. Cela permettra notamment au dispositif PCMAP et au module ME1 maître de ne pas recevoir un volume d'information important pendant une très courte période, mais des données uniformément réparties dans le temps. Cette trame de synchronisation n'est pas prévue dans la première messagerie dans le premier environnement.

Les modules esclaves ME2 à MEn ayant reçu la trame de synchronisation, se synchronisent par rapport à celle-ci pour émettre chacun leurs données avec un retard différent sur le bus B, chacun dans une trame de module. Cette trame de synchronisation est par exemple périodique de période T. Les modules esclaves MEi ayant chacun une adresse différente ADRi, avec i compris entre 1 et n, émettent leurs données sur le bus B par exemple avec un retard R = k * ADRi, où k est une constante temporelle. Par exemple, à la figure 8, les modules esclaves MEi, avec i compris entre 1 et n, émettent leurs données sur le bus B par exemple avec un retard R = i * T', où T' est une constante temporelle, égale à T/n. Par exemple T = 150 ms, n = 15 et T' = 10 ms à la figure 8, où les créneaux temporels d'émission des données des modules ME1 à ME15 sont indiqués par les cases foncées en diagonale. Bien entendu, dans d'autres exemples de réalisation, T' peut être inférieure à T/n.

Les données concernées en émission depuis les modules comportent par exemple :
- les grandeurs physiques (par exemple les mesures),
- les alarmes,
- les états,
- la consigne au chargeur.

Il en est de même pour les chargeurs CHG1 à CHHn, émettant chacun :
- le message de défaut du chargeur CHG associé au module,
- le message d'état du chargeur CHG associé au module.

Le module maître ME1 récupère les données envoyées par les autres modules et chargeurs. En cas d'absence d'une des trames de module, une alarme est générée, qui aura pour conséquence d'activer toutes les alarmes en direction du superviseur SVE, et de mettre à zéro la valeur maximum autorisée de courant de décharge et la valeur maximum autorisée de courant de régénération des cellules.

L'envoi des autres messages peut être géré de manière asynchrone.

En cas d'absence de trame de synchronisation, les modules ME et les chargeurs CHG passent dans un mode sécuritaire, dans lequel la consigne de tension du chargeur est réglée à une valeur minimum.

La communication entre le module maître ME1 et le superviseur SVE comporte, en plus des messages de la première messagerie, par exemple les messages suivants :
- un premier message d'envoi du module ME1 au superviseur SVE, de l'état, de la tension totale du pack de batterie, de la jauge de la batterie (minimum des jauges des modules), d'une valeur maximum autorisée de courant de décharge et d'une valeur maximum autorisée de courant de régénération des cellules (la régénération des cellules se produisant lorsque la machine VE recharge les cellules),
- un deuxième message d'envoi d'une ou de plusieurs alarmes du module ME1 au superviseur SVE, comme par exemple une alarme thermique (par exemple en cas de dépassement d'une température préenregistrée), une alarme de tension critique (par exemple en cas de tension d'une cellule en dehors de tolérances prescrites), une alarme générale (par exemple en cas d'un défaut d'un fusible thermique 35 sur un module ou en cas de défaillance d'un thermocouple de l'unité 26 ou 27 de mesure de température sur un module),
- un troisième message d'envoi du module ME1 au superviseur SVE de la valeur du courant fourni ou absorbé par le pack sur les bornes 23, 24, et/ou de la valeur de la température maximum du pack,
- un quatrième message d'envoi du superviseur SVE au module ME1 d'au moins l'un parmi :
   ➢ un acquittement d'alarme,
   ➢ une demande de consommation (demande de roulage dans le cas de l'application à une chaîne de traction d'un véhicule automobile). Si l'un ou l'autre des modules ME du pack de batterie est en veille ou en arrêt, la réception par le module ME1 du message de demande de consommation provoque le passage du module ME1 et des autres modules ME du pack en mode actif. Lorsque les modules ME du pack, sont passés en mode actif, le module ME1 renvoie un message de passage en mode actif au superviseur SVE. Ce n'est que lorsque le superviseur SVE a reçu message de passage en mode actif que la machine VE est autorisée à fonctionner (c'est-à-dire à rouler dans le cas de l'application à une chaîne de traction d'un véhicule automobile).
   ➢ Une demande de mise en veille du pack de batterie. Lorsque le module maître ME reçoit une demande de mise en veille, il la retransmet vers les autres modules ME pour provoquer leur mise en veille. Le mode de veille du pack de batterie est activé lorsque tous ses modules ME sont en veille.
   ➢ Une demande d'arrêt du pack de batterie. Lorsque le module maître ME reçoit une demande d'arrêt, il la retransmet vers les autres modules ME pour provoquer leur arrêt. Le mode arrêt du pack de batterie est provoqué par le passage à l'arrêt d'au moins l'un de ses modules ME.

Dans les première, deuxième et troisième messageries, les messages comportent des priorités de transmission sur le bus B. Ces priorités ont par exemple l'ordre décroissant indiqué ci-dessous pour les première, deuxième et troisième messageries :
- priorité très haute pour le message de transmission de l'information de configuration de messagerie depuis l'élément configurateur aux modules ME,
- priorité très haute pour la transmission depuis le module maître ME1 d'une trame de synchronisation,
- priorité haute pour la transmission depuis les modules ME des alarmes, des grandeurs physiques (par exemple mesures), de la consigne au chargeur,
- priorité haute pour la transmission depuis le chargeur d'un message de défaut ou d'un message d'état,
- priorité haute pour la transmission depuis le module maître ME1 de commandes vers les modules esclaves,
- priorité moyenne pour la transmission depuis les modules ME des valeurs brutes converties, des états, des paramètres, des dates des alarmes,
- priorité moyenne pour la transmission des autres messages provenant du dispositif PCMAP,
- priorité basse pour la transmission depuis le module ME1 maître au superviseur SVE des premier, deuxième et troisième messages mentionnés ci-dessus,
- priorité basse pour la transmission depuis le superviseur SVE au module maître ME1 du quatrième message mentionné ci-dessus.

En cas de perte de connexion du réseau B, les modules sont placés à l'arrêt, ce qui est le mode de repli le plus sécurisé.

## Revendications

1. Module de batterie, comportant :
- une pluralité de cellules (10) de stockage d'énergie électrique, rechargeables et déchargeables,
- deux bornes extérieures (23, 24) d'utilisation des cellules,
- une infrastructure (102, 29) de communication de messages comportant au moins un accès (29) de communication avec l'extérieur du module,
- une unité (100) de commande de module, comportant une unité de traitement de messages, reliée à l'infrastructure (102, 29) de communication, pour envoyer et recevoir des messages sur l'infrastructure de communication,
**caractérisé en ce qu'**au moins deux des messageries choisies parmi :
- une première messagerie de caractérisation des cellules,
- une deuxième messagerie de formage des cellules, et
- une troisième messagerie d'exploitation d'un pack de batterie comportant plusieurs modules connectés par leurs bornes d'utilisation, lorsque le pack est associé à une machine consommatrice en vue de l'alimenter en énergie électrique,
sont prevues dans l'unité de traitement de messages, laquelle est configurable en l'une quelconque des messageries prévues sur celle-ci pour utiliser l'infrastructure (102, 29) de communication.

2. Modulé de batterie suivant la revendication 1, **caractérisé en ce que** l'unité de commande comporte :
- un moyen de réception d'une information de configuration de messagerie,
- une mémoire permanente (32) pour enregistrer l'information de configuration de messagerie,
- un moyen automatique de configuration de son unité de traitement de messages suivant la messagerie correspondant à l'information de configuration de messagerie présente dans la mémoire permanente (32).

3. Module de batterie suivant la revendication 2, **caractérisé en ce que** le moyen automatique de configuration comporte un moyen pour scruter la valeur de l'information de configuration de messagerie présente dans la mémoire permanente (32) et un moyen de sélection automatique de la messagerie correspondant à la valeur indiquée par cette information de configuration de messagerie.

4. Module de batterie suivant l'une quelconque des revendications précédentes, **caractérisé en ce que** l'infrastructure de communication est du type bus, pour permettre de connecter l'accès extérieur à un bus de communication.

5. Module de batterie suivant la revendication 4 en combinaison avec la revendication 2 ou 3, **caractérisé en ce que** la première messagerie comprend des moyens (M1) permettant l'utilisation du module (ME) dans un premier environnement matériel comportant les éléments suivants, reliés par leur accès de communication de messages au bus (B) de communication: un dispositif (PCMAP) de téléchargement des messageries vers le module (ME), comportant un moyen d'envoi au module d'une information de configuration de l'unité de traitement de messages du module selon la première messagerie, un chargeur (CHG) relié au module (ME) par une liaison de transport de courant électrique de charge en vue de charger ses cellules en énergie électrique, une interface homme ― machine (IHM) pour permettre à un utilisateur d'envoyer des messages de commande de fonctionnement au chargeur et/ou au module et de recevoir du chargeur et/ou du module des états de ceux-ci.

6. Module de batterie suivant l'une quelconque des revendications précédentes, **caractérisé en ce qu'**il comporte des moyens (26, 27, 28) de mesure de tension et de courant des cellules et de température du module, l'unité (100) de commande étant apte à envoyer sur l'infrastructure de communication les mesures par au moins un message d'envoi de mesures prévu dans chaque messagerie.

7. Module de batterie suivant les revendications 5 et 6 prises ensemble, **caractérisé en ce que** l'unité (100) de traitement de messages comporte un moyen de réception d'un message du dispositif de téléchargement, transportant au moins un paramètre d'étalonnage des moyens de mesure dans la deuxième messagerie, et un moyen de stockage dudit paramètre d'étalonnage dans une mémoire.

8. Module de batterie suivant l'une quelconque des revendications précédentes, **caractérisé en ce que** la première messagerie est asynchrone.

9. Module de batterie suivant l'une quelconque des revendications précédentes, **caractérisé en ce que** l'infrastructure de communication est du type bus, pour permettre de connecter l'accès extérieur à un bus de communication, la deuxième messagerie comprend des moyens (M2) permettant l'utilisation du module (ME) dans un deuxième environnement matériel de formage des cellules, comportant les éléments suivants, reliés par leur accès de communication de messages au bus (B) de communication: une pluralité de modules dont les bornes d'utilisation ne sont pas reliées entre elles, au moins un chargeur (CHG) relié aux modules par au moins une liaison de transport de courant électrique de charge en vue de charger leurs cellules en énergie électrique et apte à être mis en état de charge ou d'arrêt de charge, un dispositif (FOR) de formage des cellules des modules, comportant un banc (BD) de décharge relié aux bornes (23, 24) d'utilisation des modules apte à être mis en état de décharge des cellules des modules ou d'arrêt de décharge des cellules des modules, le dispositif (FOR) de formage comportant un moyen d'envoi d'un message de commande de charge au chargeur et d'arrêt de décharge au banc de décharge et d'un message de commande d'arrêt de charge au chargeur et de décharge au banc de décharge.

10. Module de batterie suivant la revendication 9, **caractérisé en ce que** l'unité (100) de traitement de messages comporte un moyen de production d'au moins un message parmi les messages suivants dans la deuxième messagerie :
- un message (MSG2) du module (ME) au chargeur associé (CHG), transportant la consigne de charge des cellules du module,
- un message (MSG3) du module (ME) au dispositif (FOR) de formage, transportant les états et les alarmes du module (ME),
l'unité de traitement de messages comporte un moyen de réception d'un message (MSG1) d'état du chargeur (CHG) au module (ME), transportant l'état du chargeur et l'éventuelle alarme du chargeur, pour faire passer le module dans une position de repli de sécurité en cas d'absence dudit message d'état du chargeur ou dans le cas où ledit message d'état du chargeur indique une alarme ou un état de tension ou de température en dehors de tolérances prescrites.

11. Module de batterie suivant l'une quelconque des revendications précédentes, **caractérisé en ce que** la deuxième messagerie est au format CANOpen.

12. Module de batterie suivant l'une quelconque des revendications précédentes , **caractérisé en ce que** l'infrastructure de communication est du type bus, pour permettre de connecter l'accès extérieur à un bus de communication, la troisième messagerie comprend des moyens (M3) permettant l'utilisation du module (ME) dans un troisième environnement matériel d'exploitation des cellules, comportant les éléments suivants, reliés par leur accès de communication de messages au bus (B) de communication: une pluralité de modules dont les bornes d'utilisation sont reliées entre elles, au moins un chargeur (CHG) relié aux modules par au moins une liaison de transport de courant électrique de charge en vue de charger leurs cellules en énergie électrique, un superviseur (SVE) de la machine consommatrice.

13. Module de batterie suivant l'une quelconque des revendications précédentes, **caractérisé en ce que** l'unité (100) de traitement de messages comporte un moyen de production dans la troisième messagerie de consignes de charge de ses cellules, destinées à un chargeur (CHG).

14. Module de batterie suivant l'une quelconque des revendications précédentes, **caractérisé en ce que** dans la troisième messagerie, le module (ME) est apte à être configuré en module maître ou en esclave, l'unité de traitement de messages (100) du module (ME) configuré en module maître comportant un moyen d'envoi de messages de commande aux autres modules esclaves, l'unité de traitement de messages (100) du module (ME) configuré en module esclave comportant un moyen d'exécution des messages de commande du module maître.

15. Module de batterie suivant la revendication 14, **caractérisé en ce que** le module étant maître, l'unité de traitement de messages (100) comporte un moyen de production d'au moins un message parmi les messages suivants dans la troisième messagerie :
- un premier message d'envoi du module (ME1) au superviseur (SVE) d'au moins l'une des données parmi l'état du pack de batterie, la tension totale du pack de batterie, la jauge du pack de batterie, une valeur maximum autorisée de courant de décharge et d'une valeur maximum autorisée de courant de régénération des cellules,
- un deuxième message d'envoi d'au moins une alarme du module (ME1) au superviseur (SVE),
- un troisième message d'envoi du module (ME1) au superviseur (SVE) de la valeur du courant fourni ou absorbé par le pack et/ou de la valeur de la température maximum du pack.

16. Module de batterie suivant la revendication 14 ou 15, **caractérisé en ce que** le module étant maître, l'unité de traitement de messages comporte un moyen de réception dans la troisième messagerie d'un quatrième message d'envoi du superviseur (SVE) au module (ME1) d'au moins l'un parmi :
- un acquittement d'alarme,
- une demande de consommation provoquant le passage des modules du pack en mode actif, et lorsque les modules (ME) du pack sont passés en mode actif, l'envoi par le module (ME1) d'un message de passage en mode actif au superviseur (SVE) et d'autorisation de fonctionnement de la machine consommatrice,
- une demande de mise en veille des modules du pack de batterie,
- une demande d'arrêt des modules du pack de batterie.

17. Module de batterie suivant l'une quelconque des revendications 14 à 16, **caractérisé en ce que** le module étant maître, l'unité de traitement de messages (100) comporte un moyen d'émission d'une trame de synchronisation de messages des modules dans la troisième messagerie.

18. Module de batterie suivant l'une quelconque des revendications précédentes, **caractérisé en ce que** l'infrastructure de communication est du type bus CAN.

19. Module de batterie suivant les revendications précédentes, **caractérisé en ce que** les messages des première, deuxième et troisième messageries ont comme ordre de priorité de transmission sur le bus (B) :
- priorité très haute pour le message de transmission de l'information de configuration de messagerie,
- priorité très haute pour la transmission depuis le module maître (ME1) d'une trame de synchronisation,
- priorité haute pour la transmission depuis les modules (ME) des alarmes, des données, de la consigne au chargeur,
- priorité haute pour la transmission depuis le chargeur d'un message de défaut ou d'un message d'état,
- priorité haute pour la transmission depuis le module maître (ME1) de commandes vers les modules esclaves,
- priorité basse pour la transmission depuis le module (ME1) maître au superviseur (SVE) des premier, deuxième et troisième messages,
- priorité basse pour la transmission depuis le superviseur (SVE) au module maître (ME1) du quatrième message.

20. Pack de plusieurs modules de batterie selon l'une quelconque des revendications précédentes, **caractérisé en ce que** les infrastructures de communication des modules (ME) sont reliées à un bus (B) de communication pour la transmission des messages.

21. Pack selon la revendication 20, **caractérisé en ce que** les bornes d'utilisation (23, 24) des modules (ME) sont reliées électriquement entre elles pour l'exploitation du pack de batterie, un seul des modules est configuré en module maître (ME1), tandis que les autres modules (ME) sont configurés en modules esclaves de ce module maître pour les messages de la troisième messagerie, de telle sorte que les modules esclaves transmettent ou reçoivent leurs messages de la troisième messagerie via le module maître (ME1).

22. Pack selon la revendication 21, **caractérisé en ce que** chaque module (ME) comporte un moyen (26, 27, 28, 100) de production de données concernant le fonctionnement des cellules du module, le module maître (ME1) comporte un moyen d'émission sur le bus d'une trame de synchronisation pour que les modules (ME) émettent sur le bus (B) leurs messages de transport des données à des instants prescrits différents les uns des autres.

## Claims

1. Battery module, comprising:
- a plurality of rechargeable and dischargeable, electric energy storage cells (10),
- two external terminals (23,24) for cell utilization,
- a message communication infrastructure (102, 29) comprising at least one communication access (29) with the outside of the module,
- a module control unit (100), comprising a message processing unit, connected to the communication infrastructure (102, 29) to send and receive messages over the communication infrastructure,
**characterized in that** at least two of the message systems chosen from among:
- a first message system for cell characterization,
- a second message system for cell forming, and
- a third message system for utilization of a battery pack comprising several modules connected via their user terminals, when the pack is associated with a consumer machine for the purpose of supplying it with electric energy,
are provided in the message processing unit, which is configurable into any one of the message systems provided thereupon for utilization of the communication infrastructure (102,29).

2. Battery module according to claim 1, **characterized in that** the module control unit comprises:
- means to receive information for on message system configuration,
- a permanent memory (32) to store the information on message system configuration,
- automatic configuration means for configuring its message processing unit as per the message system corresponding to the information on message system configuration present in the permanent memory (32).

3. Battery module according to claim 2, **characterized in that** the automatic configuration means comprise means to poll the value of the information on message system configuration present in the permanent memory (32) and means for automatic selection of the message system corresponding to the value indicated by this information on message system configuration.

4. Battery module according to any of the preceding claims, **characterized in that** the communication infrastructure is of bus type, to allow connection of the external access to a communication bus.

5. Battery module according to claim 4 combined with claim 2 or 3, **characterized in that** the first message system comprises means (M1) enabling utilization of the module (ME) in a first material environment comprising the following elements connected via their message communication access to the communication bus (B): a device (PCMAP) to download message systems onto the module (ME), comprising means to send to the module the information on configuration of the message processing unit of the module as per the first message system, a charger (CHG) connected to the module (ME) via a transport link transporting charge electric current for the purpose of charging its cells with electric energy, a man-machine interface (IHM) to enable a user to send operating command messages to the charger and/or to the module and to receive from the charger and/or module the statuses thereof.

6. Battery module according to any of the preceding claims, **characterized in that** it comprises means (26, 27, 28) to measure the voltage and current of the cells and the temperature of the module, the control unit (100) being able to send the measurements over the communication infrastructure by at least one measurement-sending message provided in each message system.

7. Battery module according to claims 5 and 6 taken together, **characterized in that** the message processing unit (100) comprises means to receive a message from the downloading device, conveying at least one calibration parameter for the measuring means in the second message system, and means to store said calibration parameter in a memory.

8. Battery module according to any of the preceding claims, **characterized in that** the first message system is asynchronous.

9. Battery module according to any of the preceding claims, **characterized in that** the communication infrastructure is of bus type, to allow connection of the external access to a communication bus, the second message system comprises means (M2) enabling utilization of the module (ME) in a second material environment for cell forming, comprising the following elements connected via their message communication access to the communication bus (B): a plurality of modules whose user terminals are not connected together, at least one charger (CHG) connected to the modules via at least one transport link for transporting charge electric current for the purpose of charging their cells with electric energy and able to be placed in charge-on status or charge-off status, a forming device (FOR) to form the cells of the modules comprising a discharge bank (BD) connected to the user terminals (23, 24) of the modules and able to be placed in discharge-on status of the module cells or discharge-off status of the module cells, the forming device (FOR) comprising means to send a message of charge-on command to the charger and of discharge-off command to the discharge bank and a message of charge-off command to the charger and of discharge-on command to the discharge bank.

10. Battery module according to claim 9, **characterized in that** the message processing unit (100) comprises means to produce at least one message from among the following messages in the second message system:
- a message (MSG2) from the module (ME) to the associated charger (CHG) carrying the charge setpoint to charge the module cells,
- a message (MSG3) from the module (ME) to the forming device (FOR) carrying the statuses and alerts of the module (ME),
the message processing unit comprises means to receive a status message (MSG1) sent by the charger (CHG) to the module (ME), said status message carrying the status of the charger and any possible alert of the charger, to cause the module to transition to a safe fall-back position in the event of absence of said charger status message or if said status message of the charger indicates an alert or a voltage or temperature status lying outside prescribed tolerances.

11. Battery module according to any of the preceding claims, **characterized in that** the second message system is in CANopen format.

12. Battery module according to any of the preceding claims, **characterized in that** the communication infrastructure is of bus type, to enable connection of the external access to a communication bus, the third message system comprises means (M3) allowing utilization of the module (ME) in a third material environment for cell utilization comprising the following elements connected via their message communication access to the communication bus (B): a plurality of modules whose user terminals are connected together, at least one charger (CHG) connected to the modules via at least one transport link transporting charge electric current for the purpose of charging their cells with electric energy, a supervisor (SVE) of the consumer machine.

13. Battery module according to any of the preceding claims, **characterized in that** the message processing unit (100) comprises means to produce charge setpoints for its cells, in the third message system, intended for a charger (CHG).

14. Battery module according to any of the preceding claims, **characterized in that** in the third message system, the module (ME) is able to be configured as master module or as slave, the message processing unit (100) of the module (ME) configured as master module comprising means to send command messages to the other slave modules, the message processing unit (100) of the module (ME) configured as slave module comprising means to carry out command messages from the master module.

15. Battery module according to claim 14, **characterized in that** the module being master, the message processing unit (100) comprises means to produce at least one message from among the following messages in the third message system:
- a first message sent from the module (ME1) to the supervisor (SVE) sending at least one of the data items from among the status of the battery pack, the total voltage of the battery pack, the level of the battery pack, a maximum permitted discharge current and a maximum permitted cell regeneration current,
- a second message for sending at least one alert from the module (ME1) to the supervisor (SVE),
- a third message for sending from the module (ME1) to the supervisor (SVE) the value of the current supplied by or absorbed by the pack and/or the value of the maximum temperature of the pack.

16. Battery module according to claim 14 or 15, **characterized in that** the module being master, the message processing unit comprises in the third message system a means to receive a fourth message for sending from the supervisor (SVE) to the module (ME1) at least one of the following:
- an alert acknowledgement,
- a consumption request, causing transitioning of the pack modules to active mode, and when the modules (ME) of the pack have changed over to active mode, the sending by the module (ME1) of a transition-to-active-mode message to the supervisor (SVE) for authorizing functioning of the consumer machine,
- a request to place the modules of the battery pack on standby,
- a request to shut down the modules of the battery pack.

17. Battery module according to any of claims 14 to 16, **characterized in that** the module being master, the message processing unit (100) comprises means to transmit a synchronization frame for the messages of the modules in the third message system.

18. Battery module according to any of the preceding claims, **characterized in that** the communication infrastructure is of CAN bus type.

19. Battery module according to the preceding claims, **characterized in that** the messages of the first, second and third message systems have as order of priority for transmission on the bus (B):
- very high priority for the message transmitting information on message system configuration,
- very high priority for transmission of a synchronization frame by the master module (ME1),
- high priority for transmission by the modules (ME) of alerts, data, setpoint to the charger,
- high priority for transmission by the charger of a fault message or status message,
- high priority for transmission of commands from the master module (ME1) to the slave modules,
- low priority for transmission from the master module (ME1) to the supervisor (SVE) of first second and third messages,
- low priority for transmission of the fourth message from the supervisor (SVE) to the master module (ME1).

20. Pack of several battery modules according to any of the preceding claims, **characterized in that** the communication infrastructures of the modules (ME) are connected to a communication bus (B) for the transmission of the messages.

21. Pack according to claim 20, **characterized in that** the user terminals (23, 24) of the modules (ME) are electrically connected together to utilize the battery pack, only one of the modules is configured as master module (ME1), whereas the other modules (ME) are configured as slave modules of this master module for the messages of the third message system, so that the slave modules transmit or receive their messages of the third message system via the master module (ME1).

22. Pack according to claim 21, **characterized in that** each module (ME) comprises means (26, 27, 28, 100) to produce data on the functioning of the cells of the module, the master module (ME1) comprises means to transmit a synchronization frame on the bus so that the modules (ME) transmit their data-carrying messages on the bus (B) at prescribed times different from each other.

## Patentansprüche

1. Batteriemodul, welches umfasst:
- eine Vielzahl von Zellen (10) zur Speicherung elektrischer Energie, die wiederaufladbar und entladbar sind,
- zwei äußere Anschlüsse (23,24) zur Verwendung der Zellen,
- eine Infrastruktur (102, 29) zur Kommunikation von Nachrichten, welche wenigstens einen Kommunikationszugang (29) mit dem Äußeren des Moduls umfasst,
- eine Modulsteuereinheit (100), welche eine Nachrichtenverarbeitungseinheit umfasst, die mit der Kommunikationsinfrastruktur (102, 29) verbunden ist, um Nachrichten auf der Kommunikationsinfrastruktur zu senden und zu empfangen,
**dadurch gekennzeichnet, dass** wenigstens zwei der gewählten Nachrichtenübermittlungsdienste, darunter:
- ein erster Nachrichtenübermittlungsdienst zur Charakterisierung der Zellen,
- ein zweiter Nachrichtenübermittlungsdienst zur Bildung der Zellen, und
- ein dritter Nachrichtenübermittlungsdienst über die Ausnutzung eines Batteriepakets, das mehrere Module umfasst, die an ihren Verwendungsanschlüssen verbunden sind, wenn das Paket mit einer Verbrauchsmaschine verbunden ist, um sie mit elektrischer Energie zu versorgen,
in der Nachrichtenverarbeitungseinheit vorgesehen sind, die in einer beliebigen der Nachrichtenübermittlungsdienste, die auf dieser vorgesehen sind, konfigurierbar ist, um die Kommunikationsinfrastruktur (102, 29) zu benutzen.

2. Batteriemodul gemäß Anspruch 1, **dadurch gekennzeichnet, dass** die Steuereinheit umfasst:
- ein Mittel zum Empfangen einer Konfigurationsinformation des Nachrichtenübermittlungsdienstes,
- einen dauerhaften Speicher (32), um die Konfigurationsinformation des Nachrichtenübermittlungsdienstes zu speichern,
- ein automatisches Mittel zur Konfiguration seiner Nachrichtenverarbeitungseinheit gemäß dem Nachrichtenübermittlungsdienst, der der im Dauerspeicher (32) vorhandenen Nachrichtenübermittlungs-Konfigurationsinformation entspricht.

3. Batteriemodul gemäß Anspruch 2, **dadurch gekennzeichnet, dass** das automatische Konfigurationsmittel ein Mittel umfasst, um den Wert der Konfigurationsinformation des Nachrichtenübermittlungsdienstes, der im dauerhaften Speicher (32) vorhanden ist, zu prüfen, sowie ein Mittel zur automatischen Wahl des Nachrichtenübermittlungsdienstes, der dem Wert entspricht, der durch diese Nachrichtenübermittlungs-Konfigurationsinformation angegeben ist.

4. Batteriemodul gemäß einem der vorhergehenden Ansprüche, **dadurch gekennzeichnet, dass** die Kommunikationsinfrastruktur vom Typ Bus ist, um zu erlauben, den äußeren Zugang mit einem Kommunikationsbus zu verbinden.

5. Batteriemodul gemäß Anspruch 4 in Kombination mit Anspruch 2 oder 3, **dadurch gekennzeichnet, dass** der erste Nachrichtenübermittlungsdienst Mittel (M1) umfasst, die die Verwendung des Moduls (ME) in einer ersten Betriebsmittelumgebung erlauben, die die folgenden Elemente umfasst, die an ihrem Nachrichtenkommunikationszugang mit dem Kommunikationsbus (B) verbunden sind: eine Vorrichtung (PCMAP) zum Herunterladen der Nachrichtenübermittlungsdienste zum Modul (ME), umfassend ein Modul zum Senden an das Modul einer Konfigurationsinformation der Nachrichtenverarbeitungseinheit des Moduls gemäß dem ersten Nachrichtenübermittlungsdienst, einen Lader (CHG), der mit dem Modul (ME) über eine Transportverbindung für elektrischen Ladestrom verbunden ist, um seine Zellen mit elektrischer Energie zu laden, eine Mensch-Maschine-Schnittstelle (IHM), um einem Benutzer zu erlauben, Betriebssteuernachrichten an den Lader und/oder an das Modul zu schicken und um vom Lader und/oder vom Modul Zustände dieser zu empfangen.

6. Batteriemodul gemäß einem der vorhergehenden Ansprüche, **dadurch gekennzeichnet, dass** es Mittel (26, 27, 28) zur Messung der Spannung und des Stroms der Zellen und der Temperatur des Moduls umfasst, wobei die Steuereinheit (100) ausgelegt ist, um auf der Kommunikationsinfrastruktur die Messungen durch wenigstens eine Messungssendenachricht zu senden, die in jedem Nachrichtenübermittlungsdienst vorgesehen ist.

7. Batteriemodul gemäß den Ansprüchen 5 und 6 zusammengenommen, **dadurch gekennzeichnet, dass** die Nachrichtenverarbeitungseinheit (100) ein Mittel zum Empfangen einer Nachricht der Herunterlade-Vorrichtung umfasst, die wenigstens einen Kalibrierungsparameter der Messmittel im zweiten Nachrichtenübermittlungsdienst transportiert, sowie ein Mittel zur Speicherung des Kalibrierungsparameters in einem Speicher.

8. Batteriemodul gemäß einem der vorhergehenden Ansprüche, **dadurch gekennzeichnet, dass** der erste Nachrichtenübermittlungsdienst asynchron ist.

9. Batteriemodul gemäß einem der vorhergehenden Ansprüche, **dadurch gekennzeichnet, dass** die Kommunikationsinfrastruktur vom Typ Bus ist, um zu erlauben, den äußeren Zugang mit einem Kommunikationsbus zu verbinden, die zweite Nachrichtenübermittlung Mittel (M2) umfasst, die die Benutzung des Moduls (ME) in einer zweiten Betriebsmittelumgebung zur Bildung der Zellen umfasst, umfassend die folgenden Elemente, die an ihrem Nachrichtenkommunikationszugang mit dem Kommunikationsbus (B) verbunden sind: eine Vielzahl von Modulen, deren Verwendungsanschlüsse nicht untereinander verbunden sind, wenigstens einen Lader (CHG), der mit den Modulen durch wenigstens eine Transportverbindung für elektrischen Ladestrom verbunden ist, um ihre Zellen mit elektrischer Energie zu laden und ausgelegt ist, um in einen Ladezustand oder Ladestopzustand gesetzt zu werden, eine Vorrichtung zur Bildung (FOR) der Zellen der Module, umfassend eine Entladebank (BD), die mit den Verwendungsanschlüssen (23, 24) der Module verbunden ist, die ausgelegt ist, in einen Entladezustand der Zellen der Module oder Entladestopzustand der Module gesetzt zu werden, wobei die Vorrichtung (FOR) zur Bildung ein Mittel umfasst zum Senden einer Ladesteuernachricht an den Lader und einer stopentladesteuernachricht an die Entladebank und einer Stopladesteuernachricht an den Lader und einer Entladesteuernachricht an die Entladebank.

10. Batteriemodul gemäß Anspruch 9, **dadurch gekennzeichnet, dass** die Nachrichtenverarbeitungseinheit (100) ein Mittel zur Erzeugung wenigstens einer Nachricht unter den folgenden Nachrichten im zweiten Nachrichtenübermittlungsdienst umfasst:
- eine Nachricht (MSG2) des Moduls (ME) an den verbundenen Lader (CHG), die die Ladeanweisung der Zellen des Moduls transportiert,
- eine Nachricht (MSG3) des Moduls (ME) an die Bildungsvorrichtung (FOR), die die Zustände und die Alarme des Moduls (ME) transportiert,
wobei die Nachrichtenverarbeitungseinheit ein Mittel zum Empfangen einer Nachricht (MSG1) über den Zustand des Laders (CHG) an das Modul (ME) umfasst, die den Zustand des Laders und den möglichen Alarm des Laders transportiert, um das Modul in eine Fallback-Sicherheitsposition übergehen zu lassen im Falle des Fehlens der Zustandsnachricht des Laders oder in dem Fall, in dem die Zustandsnachricht des Laders einen Alarm angibt oder einen Spannungszustand oder Temperaturzustand außerhalb vorgeschriebener Toleranzen angibt.

11. Batteriemodul gemäß einem der vorhergehenden Ansprüche, **dadurch gekennzeichnet, dass** der zweite Nachrichtenübermittlungsdienst im Format CANOpen ist.

12. Batteriemodul gemäß einem der vorhergehenden Ansprüche, **dadurch gekennzeichnet, dass** die Kommunikationsinfrastruktur vom Typ Bus ist, um zu erlauben, den äußeren Zugang mit einem Kommunikationsbus zu verbinden, wobei der dritte Nachrichtenübermittlungsdienst Mittel (M3) umfasst, die die Verwendung des Moduls (ME) in einer dritten Betriebsmittelumgebung zur Ausnutzung der Zellen erlauben, welche die folgenden Elemente umfasst, die an ihrem Nachrichtenkommunikationszugang mit dem Kommunikationsbus (B) verbunden sind: eine Vielzahl von Modulen, deren Verwendungsanschlüsse untereinander verbunden sind, wenigstens einen Lader (CHG), der mit den Modulen über wenigstens eine Transportverbindung für elektrischen Ladestrom verbunden ist, um ihre Zellen mit elektrischer Energie zu laden, einen Überwacher (SVE) der Verbrauchsmaschine.

13. Batteriemodul gemäß einem der vorhergehenden Ansprüche, **dadurch gekennzeichnet, dass** die Nachrichtenverarbeitungseinheit (100) ein Mittel zur Erzeugung im dritten Nachrichtenübermittlungsdienst von Ladeanweisungen seiner Zellen, die für einen Lader (CHG) bestimmt sind, umfasst.

14. Batteriemodul gemäß einem der vorhergehenden Ansprüche, **dadurch gekennzeichnet, dass** im dritten Nachrichtenübermittlungsdienst das Modul (ME) ausgelegt ist, um als Mastermodul oder Slavemodul konfiguriert zu sein, wobei die Nachrichtenverarbeitungseinheit (100) des als Mastermodul ausgelegten Moduls (ME) ein Mittel zum Senden von Steuernachrichten (100) an andere Slavemodule umfasst, wobei die Nachrichtenverarbeitungseinheit (100) des als Slavemodul ausgelegten Moduls (ME) ein Mittel zur Ausführung der Steuernachrichten des Mastermoduls umfasst.

15. Batteriemodul gemäß Anspruch 14, **dadurch gekennzeichnet, dass** das Modul ein Master ist, die Nachrichtenverarbeitungseinheit (100) ein Mittel zur Erzeugung wenigstens einer Nachricht unter den folgenden Nachrichten im dritten Nachrichtenübermittlungsdienst umfasst:
- eine erstes Nachricht zum Senden des Moduls (ME1) an den Überwacher (SVE) der wenigstens einen der Datenangaben von dem Zustand des Batteriepakets, der Gesamtspannung des Batteriepakets, der Messung des Batteriepakets, einem zugelassenen maximalen Stromentladewert und einem maximalen zugelassenen Stromwert zur Regeneration der Zellen,
- eine zweite Nachricht zum Senden des wenigstens einen Alarms des Moduls (ME1) zum Überwacher (SVE),
- eine dritte Nachricht zum Senden des Moduls (ME1) an den Überwacher (SVE) des Werts des Stroms, der vom Paket bereitgestellt oder absorbiert wird, und/oder des maximalen Temperaturwerts des Pakets.

16. Batteriemodul gemäß Anspruch 14 oder 15, **dadurch gekennzeichnet, dass** das Modul ein Master ist, die Nachrichtenverarbeitungseinheit ein Empfangsmittel im dritten Nachrichtenübermittlungsdienst einer vierten Sendenachricht des Überwachers (SCE) an das Modul (ME1) des wenigstens einen von:
- einer Alarmquittierung,
- einer Verbrauchsanfrage, die die Umschaltung der Module des Pakets im aktiven Modus veranlasst, und wenn die Module (ME) des Pakets in den aktiven Modus umgeschaltet werden, das Senden durch das Modul (ME1) einer Umschaltenachricht in den aktiven Modus zum Überwacher (SVE) und zum Erlauben des Betriebs der Verbrauchsmaschine,
- einer Anfrage zur Standby-Schaltung der Module des Batteriepakets,
- einer Anfrage zum Anhalten der Module des Batteriepakets.

17. Batteriemodul gemäß einem der Ansprüche 14 bis 16, **dadurch gekennzeichnet, dass** das Modul ein Master ist, die Nachrichtenverarbeitungseinheit (100) ein Mittel zum Aussenden eines Nachrichtensynchronisationsrahmens der Module im dritten Nachrichtenübermittlungsdienst umfasst.

18. Batteriemodul gemäß einem der vorhergehenden Ansprüche, **dadurch gekennzeichnet, dass** die Kommunikationsinfrastruktur vom Typ CAN-Bus ist.

19. Batteriemodul gemäß einem der vorhergehenden Ansprüche, **dadurch gekennzeichnet, dass** die Nachrichten des ersten, zweiten und dritten Nachrichtenübermittlungsdienstes als Übertragungsprioritätsordnung auf dem Bus (B) haben:
- sehr hohe Priorität für die Nachricht der Übertragung von Nachrichtenübermittlungs-Konfigurationsinformation,
- sehr hohe Priorität für die Übertragung eines Synchronisationsrahmens seitens des Mastermoduls (ME1),
- hohe Priorität für die Übertragung seitens der Module (ME) der Alarme, der Daten, der Anweisung an den Lader,
- hohe Priorität für die Übertragung seitens des Laders einer Fehlernachricht oder einer Zustandsnachricht,
- hohe Priorität für die Übertragung seitens des Mastermoduls (ME1) von Befehlen in Richtung der Slavemodule,
- niedrige Priorität für die Übertragung seitens des Mastermoduls (ME1) an den Überwacher (SVE) der ersten, zweiten und dritten Nachricht,
- niedrige Priorität für die Übertragung seitens des Überwachers (SVE) an das Mastermodul (ME1) der vierten Nachricht.

20. Paket aus mehreren Batteriemodulen gemäß einem der vorhergehenden Ansprüche, **dadurch gekennzeichnet, dass** die Kommunikationsinfrastrukturen der Module (ME) mit einem Kommunikationsbus (B) zur Übertragung der Nachrichten verbunden sind.

21. Paket gemäß Anspruch 20, **dadurch gekennzeichnet, dass** die Verwendungsanschlüsse (23, 24) der Module (ME) elektrisch untereinander verbunden sind zur Ausnutzung des Batteriepakets, wobei ein einzelnes der Module als Mastermodul (ME1) konfiguriert ist, während die anderen Module (ME) als Slavemodule dieses Mastermoduls derart für die Nachrichten des dritten Nachrichtenübermittlungsdienstes konfiguriert sind, dass die Slavemodule ihre Nachrichten des dritten Nachrichtenübermittlungsdienstes über das Mastermodul (ME1) übertragen oder empfangen.

22. Paket gemäß Anspruch 21, **dadurch gekennzeichnet, dass** jedes Modul (ME) ein Mittel (26, 27, 28, 100) zur Erzeugung von Daten umfasst, die den Betrieb der Zellen des Moduls betreffen, das Mastermodul (ME1) ein Mittel zum Aussenden eines Synchronisationsrahmens auf dem Bus umfasst, damit die Module (ME) auf dem Bus (B) ihre Nachrichten über den Transport der Daten zu vorgeschriebenen, voneinander verschiedenen Zeitpunkten aussenden.
